# EUROPEAN PATENT APPLICATION

(11) **EP 4 572 486 A1**
(43) Date of publication of application: **18.06.2025**
(21) Application number: 23851710.6
(22) Date of filing: 04.08.2023
(51) Int. Cl.: H04W 72/12

(54) **PRS RECEIVING METHOD AND APPARATUS, AND TERMINAL**

(30) Priority: 10.08.2022 CN 202210959409
(71) Applicant: Vivo Mobile Communication Co., Ltd., Dongguan, Guangdong 523863 (CN)
(72) Inventor: QU, Wenkuan, Dongguan, Guangdong 523863 (CN); YANG, Qian, Dongguan, Guangdong 523863 (CN); WANG, Yuanyuan, Dongguan, Guangdong 523863 (CN); SI, Ye, Dongguan, Guangdong 523863 (CN)
(74) Representative: Winter, Brandl - Partnerschaft mbB
(86) International application number: PCT/CN2023/111193
(87) International publication number: WO 2024/032489

(57) **Abstract**

The present application belongs to the technical field of communications. Disclosed are a PRS receiving method and apparatus, and a terminal. The PRS receiving method in the embodiments of the present application comprises: when in an inactive state, a terminal determining, according to the distance T1 between a PRS and downlink control information (DCI) for scheduling, whether to receive the PRS; or, when in the inactive state, the terminal receiving the PRS within a measurement window.

## Description

### CROSS-REFERENCE TO RELATED APPLICATIONS

The disclosure claims the benefit of priority to Chinese Patent Application No. 202210959409.0, filled in China on August 10, 2022, which is incorporated herein in its entirety by reference.

### TECHNICAL FIELD

The disclosure belongs to the technical field of communication, and particularly relates to a method and apparatus for receiving a PRS, and a terminal.

### BACKGROUND

In an inactive (inactive) state, a positioning reference signal (Positioning Reference Signal, PRS) is assigned a lowest priority compared with other downlink signals and channels. When downlink control information (Downlink Control Information, DCI) for scheduling a downlink signal and/or channel is too close to the PRS, a terminal may be unable to quickly decode the DCI. In this case, the terminal will neglect the PRS and wait to receive the downlink signal and/or channel, resulting in waste of PRS resources.

### SUMMARY

Embodiments of the disclosure provide a method and apparatus for receiving a PRS, and a terminal, which can avoid waste of PRS resources and reduce power consumption of the terminal.

In a first aspect, a method for receiving a PRS is provided. The method includes:
determining, by a terminal in an inactive state according to a distance T1 between the PRS and scheduling downlink control information DCI, whether to receive the PRS;
   or
receiving, by a terminal in an inactive state, the PRS within a measurement window.

In a second aspect, an apparatus for receiving a PRS is provided. The apparatus includes:
a receiving module configured to determine, in an inactive state according to a distance T1 between the PRS and scheduling downlink control information DCI, whether to receive the PRS;
   or
receive, in an inactive state, the PRS within a measurement window.

In a third aspect, a terminal is provided. The terminal includes a processor and a memory. The memory stores a program or an instruction capable of being run on the processor. The program or the instruction is executed by the processor to implement steps of the method as mentioned in the first aspect.

In a fourth aspect, a terminal is provided. The terminal includes a processor and a communication interface. The communication interface is configured to determine, in an inactive state, according to a distance T1 between the PRS and scheduling downlink control information DCI, whether to receive the PRS;
or
receive, in an inactive state, the PRS within a measurement window.

In a fifth aspect, a communication system is provided. The communication system includes: a network-side device and a terminal. The terminal is configured to execute steps of the method for receiving a PRS as mentioned in the first aspect.

In a sixth aspect, a readable storage medium is provided. The readable storage medium stores a program or an instruction. The program or the instruction is executed by a processor to implement steps of the method as mentioned in the first aspect.

In a seventh aspect, a chip is provided. The chip includes a processor and a communication interface. The communication interface is coupled to the processor. The processor is configured to run a program or an instruction to implement the method as mentioned in the first aspect.

In an eighth aspect, a computer program/program product is provided. The computer program/program product is stored in a storage medium. The computer program/program product is executed by at least one processor to implement steps of the method for receiving a PRS as mentioned in the first aspect.

In embodiments of the disclosure, the terminal in the inactive state determines, according to the distance T1 between the PRS and the scheduling downlink control information DCI, whether to receive the PRS. In this way, in some cases, the terminal can receive the PRS having a low priority without neglecting the PRS, thereby avoiding waste of PRS resources. In addition, the terminal can receive the PRS only within the measurement window so that power consumption of the terminal can be reduced.

### BRIEF DESCRIPTION OF THE DRAWINGS

FIG. 1 is a block diagram of a radio communication system to which an embodiment of the disclosure is applicable;
FIG. 2 is a schematic flow diagram of a method for receiving a PRS according to an embodiment of the disclosure;
FIG. 3 and FIG. 4 are schematic diagrams of a PRS located inside an initial BWP according to an embodiment of the disclosure;
FIG. 5 is a schematic diagram of a PRS located outside an initial BWP according to an embodiment of the disclosure;
FIG. 6 and FIG. 7 are schematic diagrams of a measurement window according to an embodiment of the disclosure;
FIG. 8 is a schematic structural diagram of a communication device according to an embodiment of the disclosure; and
FIG. 9 is a schematic structural diagram of a terminal according to an embodiment of the disclosure.

### DETAILED DESCRIPTION

Technical solutions in embodiments of the disclosure will be clearly described below in combination with accompanying drawings in the embodiments of the disclosure. Apparently, the described embodiments are merely some embodiments rather than all embodiments of the disclosure. All other embodiments obtained by those of ordinary skill in the art based on embodiments of the disclosure all fall within the scope of protection of the disclosure.

The terms "first" and "second" in the description and claims of the disclosure are used to distinguish between similar objects, but are not used to describe a specific sequence or a sequential order. It should be understood that terms so used can be interchanged under appropriate circumstances so that embodiments of the disclosure can be implemented in a sequence other than those illustrated or described herein. Moreover, the objects distinguished by "first" and "second" generally belong to one type. A number of objects is not limited. For example, one or more first objects are possible. In addition, "and/or" in the description and claims indicates at least one of the connected objects, and the character "/" generally indicates that the associated objects are in an "or" relationship.

It should be noted that technologies described in an embodiment of the disclosure are not limited to a long term evolution (Long Term Evolution, LTE)/LTE-advanced (LTE-Advanced, LTE-A) system, but can also be used for other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA) and other systems. The terms "system" and "network" in an embodiment of the disclosure are often interchangeably used. The described technologies may be used for systems and radio technologies mentioned above as well as for other systems and radio technologies. A new radio (New Radio, NR) system is described in the following descriptions for an illustrative purpose, and NR terms are used in most of the following descriptions. However, these technologies can also be applied to applications other than NR system applications, such as a 6th generation (6th Generation, 6G) communication system.

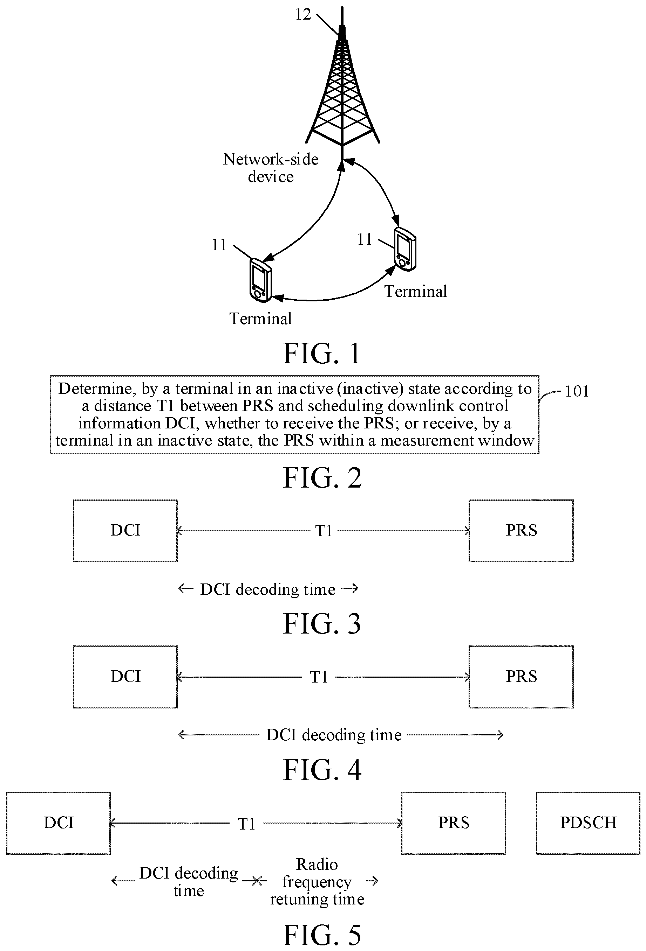

FIG. 1 shows a block diagram of a radio communication system to which an embodiment of the disclosure is applicable. The radio communication system includes a terminal 11 and a network-side device 12. The terminal 11 can be a mobile phone, a tablet personal computer (Tablet Personal Computer), a laptop computer (Laptop Computer) which is also referred to as a notebook computer, a personal digital assistant (Personal Digital Assistant, PDA), a palm computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), a pedestrian user equipment (Pedestrian User Equipment, PUE), and smart home (a home device having a radio communication function, such as a refrigerator, a television, a washing machine, and furniture), a game console, a personal computer (personal computer, PC), a teller machine, a self-service machine, and another terminal-side device. The wearable device includes: a smart watch, a smart band, a smart earphone, smart glasses, a smart jewelry (a smart bracelet, a smart hand chain, a smart ring, a smart necklace, a smart anklet, a smart foot chain, etc.), a smart wristband, smart clothing, etc. It should be noted that a specific type of the terminal 11 is not limited in an embodiment of the disclosure. The network-side device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless Local Area Network, WLAN) access point, or a WiFi node, etc. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or another appropriate term in the field, as long as the same technical effect can be achieved. The base station is not limited to a specific technical vocabulary. It should be noted that in an embodiment of the disclosure, only a base station in an NR system is taken as an example for introduction, and a specific type of the base station is not limited.

In an inactive state, a priority of the PRS is lowest relative to those of other downlink signals and/or channels. Thus, in a case that DCI for scheduling a downlink signal and/or channel is too close to the PRS, UE may be unable to quickly decode the DCI. In this case, there are two solutions. One solution is to neglect the PRS and wait to receive a downlink signal and/or channel. The other solution is a solution designed for measurement of a radio access network 1 (RAN1) outside a measurement gap (measurement gap) in a connected (connected) state, with a distance between the DCI and the PRS and DCI processing time being compared. In a case that the distance between the DCI and the PRS is greater than the DCI processing time, the UE can receive a downlink signal and/or channel. In a case that the distance between the DCI and the PRS is less than the DCI processing time, the UE cannot decode the DCI before receiving the PRS, and the UE can receive the PRS.

In the inactive state, in a case that the PRS is located outside an initial downlink bandwidth part (initial DownLink Bandwidth Part, initial DL BWP), if the UE is required to receive the PRS, radio frequency retuning (Radio Frequency retuning, RF retuning) is required to be carried out. Specific values are defined in the related art: in a case that a positioning layer (positioning layer) and a serving cell (serving cell) both come from a frequency range 2 (FR2), RF retuning time is 0.25 ms. In a case that one of the positioning layer and the serving cell comes from a FR1, the RF retuning time is 0.5 ms.

In addition, in the related art, the UE is required to search for the PRS within entire time T (a least common multiple of a discontinuous reception (Discontinuous Reception, DRX) period and a PRS period). Concepts of a PRS processing window measured outside a gap and a measurement gap window measured inside a gap in a connected state are missing, resulting in an increase in power consumption of the UE.

The method for receiving a PRS provided in an embodiment of the disclosure will be described in detail below in combination with accompanying drawings and through some embodiments and their application scenarios.

An embodiment of the disclosure provides a method for receiving a PRS. As shown in FIG. 2, the method includes:
Step 101: A terminal in an inactive state determines, according to a distance T1 between the PRS and scheduling downlink control information DCI, whether to receive the PRS;
or
a terminal in an inactive state receives the PRS within a measurement window.

The scheduling DCI includes uplink scheduling DCI and downlink scheduling DCI. In an embodiment of the disclosure, scheduling DCI is taken as an example for description.

In embodiments of the disclosure, the terminal in the inactive state determines, according to the distance T1 between the PRS and the scheduling downlink control information DCI, whether to receive the PRS. In this way, in some cases, the terminal can receive the PRS having a low priority without neglecting the PRS, thereby avoiding waste of PRS resources. In addition, the terminal can receive the PRS only within the measurement window so that power consumption of the terminal can be reduced.

In some embodiments, the step that a terminal determines, according to a distance T1 between the PRS and scheduling downlink control information DCI, whether to receive the PRS includes:
the terminal determines, according to a relationship between T1 and DCI processing time T2, whether to receive the PRS;
   or
the terminal determines, according to a relationship between a sum of T2 and radio frequency retuning time T3 and T1, whether to receive the PRS.

In some embodiments, the step that the terminal determines, according to a relationship between T1 and DCI processing time T2, whether to receive the PRS includes at least one of the following:
the terminal schedules, in cases that the PRS is located inside an initial bandwidth part BWP and T1 is greater than T2, transmission according to the scheduling DCI without receiving the PRS; and otherwise the terminal receives the PRS without scheduling transmission. For example, in cases that the PRS is located inside the initial BWP and T1 is not greater than T2, the terminal receives the PRS without scheduling the transmission.

In an embodiment of the disclosure, in cases that the PRS is located inside the initial BWP, and the distance T1 between the PRS and the DCI for scheduling the downlink signal and/or channel is greater than the DCI processing time T2, it indicates that the UE can receive the scheduled downlink signal and/or channel in time. Even if the UE receives the scheduled downlink signal and/or channel, reception of the PRS is not affected, and the UE is required to receive the scheduled downlink signal and/or channel. Otherwise, the UE is not required to receive the scheduled downlink signal and/or channel, and the UE can receive the PRS, to avoid waste of PRS resources. For example, in cases that the PRS is located inside the initial BWP, and the distance T1 between the PRS and the DCI for scheduling the downlink signal and/or channel is not greater than the DCI processing time T2, it indicates that the UE cannot receive the scheduled downlink signal and/or channel in time. In this case, the UE is not required to receive the scheduled downlink signal and/or channel, and the UE can receive the PRS, to avoid waste of PRS resources.

In some embodiments, the step that the terminal determines, according to a relationship between a sum of T2 and radio frequency retuning time T3 and T1, whether to receive the PRS includes at least one of the following:
the terminal receives, in cases that the PRS is located outside an initial BWP, T1 is greater than a sum of T2 and T3 and transmission scheduled by the scheduling DCI does not collide with the PRS, the PRS without scheduling the transmission; and otherwise the terminal schedules transmission according to the scheduling DCI without receiving the PRS. For example, in cases that the PRS is located outside the initial BWP, T1 is not greater than a sum of T2 and T3, and/or transmission scheduled by the scheduling DCI collides with the PRS, the terminal schedules transmission according to the scheduling DCI without receiving the PRS.

In a case that the PRS is located outside the initial BWP, a relative relationship between the distance T1 between the PRS and the DCI for scheduling the downlink signal and/or channel, and the DCI processing time T2 and the RF retuning time T3 is required to be compared. In cases that T1 is greater than a sum of T2 and T3, and the scheduled downlink signal and/or channel does not collide with the PRS, the UE is not required to receive the scheduled downlink signal and/or channel, and can receive the PRS, to avoid waste of PRS resources. Otherwise, the UE is required to receive the scheduled downlink signal and/or channel. For example, in cases that the PRS is located outside the initial BWP, T1 is not greater than a sum of T2 and T3, and/or transmission scheduled by the scheduling DCI collides with the PRS. In this case, the UE is required to receive a scheduled downlink signal and/or channel.

In some embodiments, T2 is determined by at least one of:
a capability of the terminal;
a first value configured by a network-side device; and
a second value agreed on in a protocol.

In some embodiments, T3 is determined by frequency ranges to which a positioning layer and a serving cell belong.

In a specific example, as shown in FIG. 3, in the inactive state, in cases that the PRS is located inside the initial BWP, and the distance T1 between the PRS and the DCI for scheduling a downlink signal and/or channel is greater than the DCI processing time (that is, DCI decoding time), the UE is required to receive the scheduled downlink signal and/or channel.

As shown in FIG. 4, in the inactive state, in cases that the PRS is located inside the initial BWP, and the distance T1 between the PRS and the DCI for scheduling the downlink signal and/or channel is less than the DCI processing time (that is, the DCI decoding time), the UE is not required to receive the scheduled downlink signal and/or channel, and the UE can receive the PRS.

As shown in FIG. 5, in the inactive state, in cases that the PRS is located outside the initial BWP, and the distance T1 between the PRS and the DCI for scheduling a downlink signal and/or channel is greater than a sum of DCI processing time (that is, DCI decoding time) and RF retuning time, and the scheduled downlink signal and/or channel does not collide with the PRS, the UE is not required to receive the scheduled downlink signal and/or channel, and can receive the PRS.

In the embodiment, in the inactive state, a condition under which the terminal can receive the PRS is clarified according to a relative relationship between a distance between the DCI for scheduling a downlink signal and/or channel and the PRS, and DCI processing time and RF retuning time, thereby avoiding waste of PRS resources.

In addition, in an embodiment of the disclosure, the concept of the measurement window is introduced in the inactive state, and the UE is only required to receive the PRS within the measurement window so that power consumption of the UE can be reduced.

In some embodiments, a quantity of the measurement window included in the measurement window period is greater than or equal to 1. For example, the quantity of the measurement window may be 1, 2, or more.

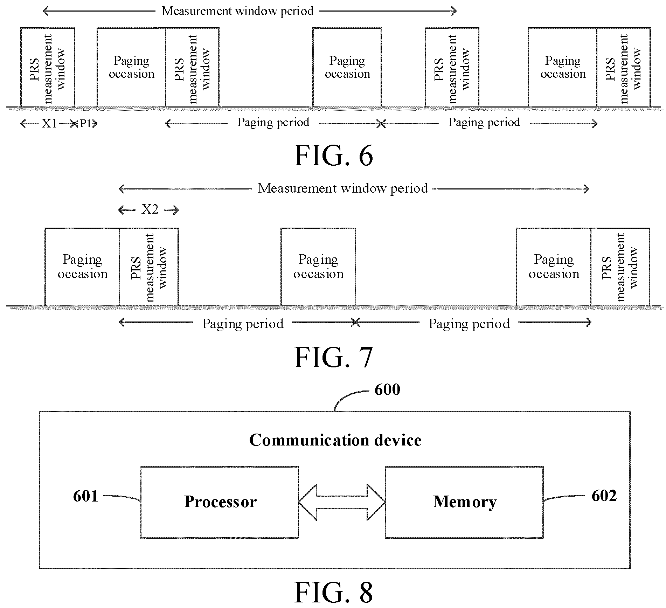

In some embodiments, in a case that the quantity of the measurement window included in the measurement window period is equal to 2, as shown in FIG. 6, a start time point of a first measurement window is Y1-(X1+P1), Y1 is a start time point of a paging occasion (paging occasion), X1 is duration of the first measurement window, and P1 is pre-paging preparation time of the terminal; and
a start time point Y2 of a second measurement window is an end time point of the paging occasion.

In some embodiments, in a case that the quantity of the measurement window included in the measurement window period is equal to 1, as shown in FIG. 7, a start time point of the measurement window is Y1-(X2+P1), Y1 is a start time point of a paging occasion, X2 is duration of the measurement window, and P1 is pre-paging preparation time of the terminal; or
a start time point of the measurement window is an end time point of the paging occasion.

The measurement window period may be a least common multiple of the PRS period and the paging occasion period, and duration of the measurement window is available PRS duration.

In the embodiment, duration X1 or X2 of the measurement window is determined by the terminal, configured by a network-side device, or agreed on in a protocol; and the pre-paging preparation time of the terminal is determined by the terminal, configured by the network-side device, or agreed on in the protocol. Specifically, X1 and X2 may be the same or different.

In the embodiment, the measurement window is introduced in the inactive state. The quantity of the measurement window and positions of different quantities of measurement windows are specified, and the measurement window period is specified. By introducing the measurement window and disposing the measurement window before and after the paging occasion, power consumption of the terminal is effectively reduced.

An execution subject of a method for receiving a PRS provided in an embodiment of the disclosure may be an apparatus for receiving a PRS. In an embodiment of the disclosure, an example in which the apparatus for receiving a PRS executes the method for receiving a PRS is taken to describe the apparatus for receiving a PRS provided in an embodiment of the disclosure.

The apparatus for receiving a PRS provided in an embodiment of the disclosure includes:
a receiving module configured to determine, in an inactive state according to a distance T1 between the PRS and scheduling downlink control information DCI, whether to receive the PRS;
   or
receive, in an inactive state, the PRS within a measurement window.

In embodiments of the disclosure, the terminal in the inactive state determines, according to the distance T1 between the PRS and the scheduling downlink control information DCI, whether to receive the PRS. In this way, in some cases, the terminal can receive the PRS having a low priority without neglecting the PRS, thereby avoiding waste of PRS resources. In addition, the terminal can receive the PRS only within the measurement window so that power consumption of the terminal can be reduced.

In some embodiments, the receiving module is specifically configured to determine, according to a relationship between T1 and DCI processing time T2, whether to receive the PRS;
or
determine, according to a relationship between a sum of T2 and radio frequency retuning time T3 and T1, whether to receive the PRS.

In some embodiments, the receiving module is specifically configured to schedule, in cases that the PRS is located inside an initial bandwidth part BWP and T1 is greater than T2, transmission according to the scheduling DCI without receiving the PRS; and otherwise
receive, in cases that the PRS is located inside the initial BWP and T1 is not greater than T2, the PRS without scheduling the transmission.

In an embodiment of the disclosure, in cases that the PRS is located inside the initial BWP, and the distance T1 between the PRS and the DCI for scheduling the downlink signal and/or channel is greater than the DCI processing time T2, it indicates that the UE can receive the scheduled downlink signal and/or channel in time. Even if the UE receives the scheduled downlink signal and/or channel, reception of the PRS is not affected, and the UE is required to receive the scheduled downlink signal and/or channel. Otherwise, in cases that the PRS is located inside the initial BWP, and the distance T1 between the PRS and the DCI for scheduling the downlink signal and/or channel is not greater than the DCI processing time T2, it indicates that the UE cannot receive the scheduled downlink signal and/or channel in time. The UE is not required to receive the scheduled downlink signal and/or channel, and the UE can receive the PRS, to avoid waste of PRS resources.

In some embodiments, the receiving module is specifically configured to receive, in cases that the PRS is located outside an initial BWP, T1 is greater than a sum of T2 and T3 and transmission scheduled by the scheduling DCI does not collide with the PRS, the PRS without scheduling the transmission; and otherwise schedule, in cases that the PRS is located outside the initial BWP, T1 is not greater than a sum of T2 and T3, and/or transmission scheduled by the scheduling DCI collides with the PRS, transmission according to the scheduling DCI without receiving the PRS.

In a case that the PRS is located outside the initial BWP, a relative relationship between the distance T1 between the PRS and the DCI for scheduling the downlink signal and/or channel, and the DCI processing time T2 and the RF retuning time T3 is required to be compared. In cases that T1 is greater than a sum of T2 and T3, and the scheduled downlink signal and/or channel does not collide with the PRS, the UE is not required to receive the scheduled downlink signal and/or channel, and can receive the PRS, to avoid waste of PRS resources. Otherwise, in cases that the PRS is located outside the initial BWP, T1 is not greater than a sum of T2 and T3, and/or transmission scheduled by the scheduling DCI collides with the PRS, the UE is required to receive a scheduled downlink signal and/or channel.

In some embodiments, T2 is determined by at least one of:
a capability of the terminal;
a first value configured by a network-side device; and
a second value agreed on in a protocol.

In some embodiments, T3 is determined by frequency ranges to which a positioning layer and a serving cell belong.

In some embodiments, a quantity of the measurement window included in the measurement window period is greater than or equal to 1.

In some embodiments, in a case that the quantity of the measurement window included in the measurement window period is equal to 2, a start time point of a first measurement window is Y1-(X1+P1), Y1 is a start time point of a paging occasion, X1 is duration of the first measurement window, and P1 is pre-paging preparation time of the terminal.

A start time point Y2 of a second measurement window is an end time point of the paging occasion.

In some embodiments, in a case that the quantity of the measurement window included in the measurement window period is equal to 1, a start time point of the measurement window is Y1-(X2+P1), Y1 is a start time point of a paging occasion, X2 is duration of the measurement window, and P1 is pre-paging preparation time of the terminal; or
a start time point of the measurement window is an end time point of the paging occasion.

In some embodiments, the measurement window period may be a least common multiple of the PRS period and the paging occasion period.

In some embodiments, the duration of the measurement window is available PRS duration.

In some embodiments, the duration of the measurement window is determined by the terminal, configured by a network-side device, or agreed on in a protocol.

The pre-paging preparation time of the terminal is determined by the terminal, configured by the network-side device, or agreed on in the protocol.

In the embodiment, the measurement window is introduced in the inactive state. The quantity of the measurement window and positions of different quantities of measurement windows are specified, and the measurement window period is specified. By introducing the measurement window and disposing the measurement window before and after the paging occasion, power consumption of the terminal is effectively reduced.

The apparatus for receiving a PRS in an embodiment of the disclosure may be an electronic device, such as an electronic device having an operating system, or a component in the electronic device, such as an integrated circuit or a chip. The electronic device may be a terminal or another device other than the terminal. Illustratively, the terminal may include but is not limited to the types of the terminal 11 listed above. Another device may be a server, a network attached storage (Network Attached Storage, NAS), etc., which is not specifically limited in an embodiment of the disclosure.

The apparatus for receiving a PRS provided in an embodiment of the disclosure can implement various processes implemented by method embodiments of FIG. 2 to FIG. 7, and the same technical effect can be achieved, which will not be repeated herein to avoid repetition.

Optionally, as shown in FIG. 8, an embodiment of the disclosure further provides a communication device 600. The communication device includes a processor 601 and a memory 602. The memory 602 stores a program or an instruction capable of being run on the processor 601. For example, in a case that the communication apparatus 600 is a terminal, the program or the instruction is executed by the processor 601 to implement various steps of the above embodiments of the method for receiving a PRS, and the same technical effect can be achieved, which will not be repeated herein to avoid repetition.

An embodiment of the disclosure further provides a terminal. The terminal includes a processor and a memory. The memory stores a program or an instruction capable of being run on the processor. The program or the instruction is executed by the processor to implement steps of the method for receiving a PRS as mentioned above.

An embodiment of the disclosure further provides a terminal. The terminal includes a processor and a communication interface. The communication interface is configured to determine, in an inactive state, according to a distance T1 between the PRS and scheduling downlink control information DCI, whether to receive the PRS;
or
receive, in an inactive state, the PRS within a measurement window.

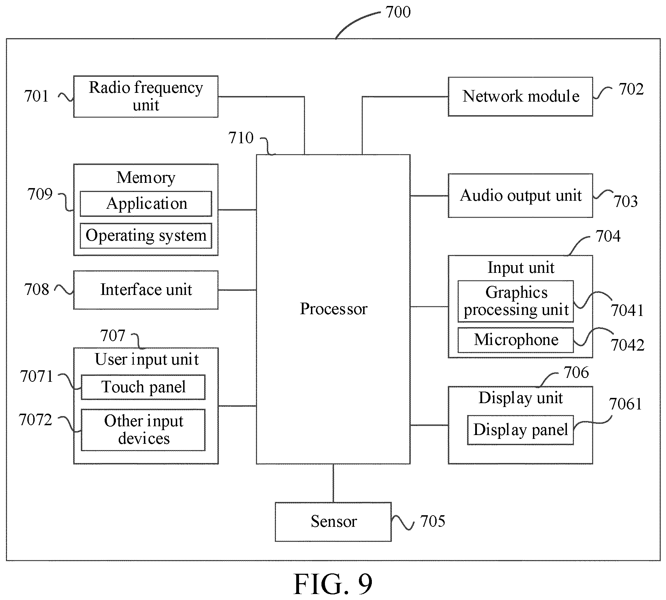

An embodiment of the disclosure further provides a terminal. The terminal includes a processor and a communication interface. The terminal embodiment corresponds to the above terminal-side method embodiment. Various implementation processes and implementation methods in the above method embodiments can be applied to the terminal embodiment, and the same technical effect can be achieved. Specifically, FIG. 9 is a schematic diagram of a hardware structure of a terminal according to an embodiment of the disclosure.

The terminal 700 includes but is not limited to: at least some of components such as a radio frequency unit 701, a network module 702, an audio output unit 703, an input unit 704, a sensor 705, a display unit 706, a user input unit 707, an interface unit 708, a memory 709 and a processor 710.

Those skilled in the art can understand that the terminal 700 may further include a power source (such as a battery) for supplying power to various components. The power source may be logically connected to the processor 710 by a power management system, so that functions, such as charging, discharging, and power consumption management are implemented by the power management system. The terminal structure shown in FIG. 9 constitutes no limitation on the terminal. The terminal may include more or fewer components than those shown in the figure, some component combinations, or different component arrangements, which will not be repeated herein.

It should be understood that in an embodiment of the disclosure, an input unit 704 may include a graphics processing unit (Graphics Processing Unit, GPU) 7041 and a microphone 7042. The graphics processing unit 7041 processes image data of a static picture or a video that is acquired by an image capture apparatus (such as a camera) in a video capture mode or an image capture mode. The display unit 706 may include a display panel 7061. The display panel 7061 may be configured by using a liquid crystal display, an organic light-emitting diode, etc. The user input unit 707 includes a touch panel 7071 and at least one of other input devices 7072. The touch panel 7071 is also referred to as a touch screen. The touch panel 7071 may include a touch detection apparatus and a touch controller. The other input devices 7072 may include but are not limited to a physical keyboard, a functional key (such as a volume control key or a switch key), a track ball, a mouse and a joystick, which will not be repeated herein.

In an embodiment of the disclosure, after receiving downlink data from a network-side device, the radio frequency unit 701 may transmit the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low noise amplifier, a duplexer, etc.

The memory 709 may be configured to store a software program, an instruction and various types of data. The memory 709 may mainly include a first storage area for storing a program or an instruction and a second storage area for storing data. The first storage area may store an operating system, an application or an instruction required for at least one function (such as a sound playback function and an image playback function), etc. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in an embodiment of the disclosure includes but is not limited to these and any other suitable types of memories.

The processor 710 may include one or more processing units. Optionally, the processor 710 integrates an application processor and a modem processor. The application processor mainly processes operations related to an operating system, a user interface, an application program, etc. The modem processor mainly processes a wireless communication signal, such as a baseband processor. It can be understood that the above modem processor may not be integrated into the processor 710.

In some embodiments, the processor 710 is configured to determine, in an inactive state, according to a distance T1 between the PRS and scheduling downlink control information DCI, whether to receive the PRS;
or
receive, in an inactive state, the PRS within a measurement window.

In some embodiments, the processor 710 is configured to determine, according to a relationship between T1 and DCI processing time T2, whether to receive the PRS;
or
determine, according to a relationship between a sum of T2 and radio frequency retuning time T3 and T1, whether to receive the PRS.

In some embodiments, the processor 710 is configured to schedule, in cases that the PRS is located inside an initial bandwidth part BWP and T1 is greater than T2, transmission according to the scheduling DCI without receiving the PRS; and otherwise
receive the PRS without scheduling transmission.

In some embodiments, the processor 710 is configured to receive, in cases that the PRS is located outside an initial BWP, T1 is greater than a sum of T2 and T3 and transmission scheduled by the scheduling DCI does not collide with the PRS, the PRS without scheduling the transmission; and otherwise schedule transmission according to the scheduling DCI without receiving the PRS.

In some embodiments, T2 is determined by at least one of:
a capability of the terminal;
a first value configured by a network-side device; and
a second value agreed on in a protocol.

In some embodiments, T3 is determined by frequency ranges to which a positioning layer and a serving cell belong.

In some embodiments, a quantity of the measurement window included in the measurement window period is greater than or equal to 1.

In some embodiments, in a case that the quantity of the measurement window included in the measurement window period is equal to 2, a start time point of a first measurement window is Y1-(X1+P1), Y1 is a start time point of a paging occasion, X1 is duration of the first measurement window, and P1 is pre-paging preparation time of the terminal.

A start time point Y2 of a second measurement window is an end time point of the paging occasion.

In some embodiments, in a case that the quantity of the measurement window included in the measurement window period is equal to 1, a start time point of the measurement window is Y1-(X2+P1), Y1 is a start time point of a paging occasion, X2 is duration of the measurement window, and P1 is pre-paging preparation time of the terminal; or
a start time point of the measurement window is an end time point of the paging occasion.

In some embodiments, the measurement window period may be a least common multiple of the PRS period and the paging occasion period.

In some embodiments, the duration of the measurement window is available PRS duration.

In some embodiments, the duration of the measurement window is determined by the terminal, configured by a network-side device, or agreed on in a protocol.

The pre-paging preparation time of the terminal is determined by the terminal, configured by the network-side device, or agreed on in the protocol.

An embodiment of the disclosure further provides a readable storage medium. A program or an instruction is stored in the readable storage medium. The program or the instruction is executed by a processor to implement various processes of the above embodiments of the method for receiving a PRS, and the same technical effect can be achieved, which will not be repeated herein to avoid repetition.

The processor is a processor in the terminal described in the above embodiments. The readable storage medium includes a computer-readable storage medium, such as a computer read-only memory ROM, a random access memory RAM, a magnetic disk or an optical disk.

An embodiment of the disclosure further provides a chip. The chip includes a processor and a communication interface. The communication interface is coupled to the processor. The processor is configured to run a program or an instruction to implement various processes of the above embodiments of the method for receiving a PRS, and the same technical effect can be achieved, which will not be repeated herein to avoid repetition.

It should be understood that the chip mentioned in an embodiment of the disclosure may alternatively be referred to as a system on a chip.

An embodiment of the disclosure further provides a computer program/program product. The computer program/program product is stored in a storage medium and executed by at least one processor to implement various processes of the above embodiments of the method for receiving a PRS, and the same technical effect can be achieved, which will not be repeated herein to avoid repetition.

An embodiment of the disclosure further provides a communication system. The communication system includes: a network-side device and a terminal. The terminal is configured to execute steps of the method for receiving a PRS as mentioned above.

It should be noted that the terms "include", "comprise" or their any other variations herein are intended to cover a non-exclusive inclusion, so that a process, method, article or apparatus including a series of elements not only includes those elements, but also includes other elements that are not explicitly listed, or also includes inherent elements of such a process, method, article or apparatus. Without more limitations, an element limited by phrases "comprising a..." or "including a..." does not exclude other same elements in a process, method, article or apparatus including the element. In addition, it should be noted that the scopes of the method and apparatus in implementations of the disclosure are not limited to execution of functions in the sequence shown or discussed, but may alternatively include execution of functions in a substantially simultaneous manner or in the reverse sequence of the functions involved. For example, the described method may be executed in an order different from that described, and various steps may be added, omitted or combined. In addition, features described with reference to some examples may alternatively be combined in other examples.

Through the descriptions in the above implementations, those skilled in the art would clearly know that the methods according to the above embodiments may be achieved by software plus a necessary general-purpose hardware platform, and certainly may alternatively be achieved by hardware, but in many cases, the former is a better implementation. Based on the understanding, the technical solution of the disclosure may be embodied in a form of a computer software product in essence or a part contributing to the prior art. The computer software product is stored in a storage medium (such as an ROM/RAM, a magnetic disk, and an optical disk), and includes several instructions for enabling a terminal (which may be a mobile phone, a computer, a server, an air conditioner, a network device, etc.) to execute the methods in all embodiments of the disclosure.

The embodiments of the disclosure are described above in combination with accompanying drawings. However, the disclosure is not limited to the above particular implementations. The above particular implementations are merely schematic and not limitative. Those of ordinary skill in the art can also make various variations under the teaching of the disclosure without departing from the spirit of the disclosure and the scope of protection of the claims. Such variations all fall within the scope of protection of the disclosure.

## Claims

1. A method for receiving a positioning reference signal PRS, comprising:
determining, by a terminal in an inactive state according to a distance T1 between the PRS and scheduling downlink control information DCI, whether to receive the PRS;
or
receiving, by a terminal in an inactive state, the PRS within a measurement window.

2. The method according to claim 1, wherein the determining, by a terminal according to a distance T1 between the PRS and scheduling downlink control information DCI, whether to receive the PRS comprises:
determining, by the terminal according to a relationship between T1 and DCI processing time T2, whether to receive the PRS;
or
determining, by the terminal according to a relationship between a sum of T2 and radio frequency retuning time T3 and T1, whether to receive the PRS.

3. The method according to claim 2, wherein the determining, by the terminal according to a relationship between T1 and DCI processing time T2, whether to receive the PRS comprises at least one of:
scheduling, by the terminal in cases that the PRS is located inside an initial bandwidth part BWP and T1 is greater than T2, transmission according to the scheduling DCI without receiving the PRS; and otherwise
receiving, by the terminal, the PRS without scheduling transmission.

4. The method according to claim 2, wherein the determining, by the terminal according to a relationship between a sum of T2 and radio frequency retuning time T3 and T1, whether to receive the PRS comprises at least one of:
receiving, by the terminal in cases that the PRS is located outside an initial BWP, T1 is greater than a sum of T2 and T3 and transmission scheduled by the scheduling DCI does not collide with the PRS, the PRS without scheduling the transmission; and otherwise
scheduling, by the terminal, transmission according to the scheduling DCI without receiving the PRS.

5. The method according to any one of claims 2 to 4, wherein T2 is determined by at least one of:
a capability of the terminal;
a first value configured by a network-side device; and
a second value agreed on in a protocol.

6. The method according to claim 2 or 4, wherein T3 is determined by frequency ranges to which a positioning layer and a serving cell belong.

7. The method according to claim 1, wherein a quantity of the measurement window comprised in a measurement window period is greater than or equal to 1, and the measurement window period is a least common multiple of a PRS period and a paging occasion period.

8. The method according to claim 7, wherein in a case that the quantity of the measurement window comprised in the measurement window period is equal to 2, a start time point of a first measurement window is Y1-(X1+P1), Y1 is a start time point of a paging occasion, X1 is duration of the first measurement window, and P1 is pre-paging preparation time of the terminal; and
a start time point Y2 of a second measurement window is an end time point of the paging occasion.

9. The method according to claim 7, wherein in a case that the quantity of the measurement window comprised in the measurement window period is equal to 1, a start time point of the measurement window is Y1-(X2+P1), Y1 is a start time point of a paging occasion, X2 is duration of the measurement window, and P1 is pre-paging preparation time of the terminal; or
a start time point of the measurement window is an end time point of the paging occasion.

10. The method according to claim 8 or 9, wherein the duration of the measurement window is available PRS duration.

11. The method according to claim 8 or 9, wherein the duration of the measurement window is determined by the terminal, configured by a network-side device, or agreed on in a protocol; and
the pre-paging preparation time of the terminal is determined by the terminal, configured by the network-side device, or agreed on in the protocol.

12. An apparatus for receiving a positioning reference signal PRS, comprising:
a receiving module configured to determine, in an inactive state according to a distance T1 between the PRS and scheduling downlink control information DCI, whether to receive the PRS;
or
receive, in an inactive state, the PRS within a measurement window.

13. The apparatus according to claim 12, wherein the receiving module is specifically configured to determine, according to a relationship between T1 and DCI processing time T2, whether to receive the PRS;
or
determine, according to a relationship between a sum of T2 and radio frequency retuning time T3 and T1, whether to receive the PRS.

14. The apparatus according to claim 13, wherein the receiving module is specifically configured to schedule, in cases that the PRS is located inside an initial bandwidth part BWP and T1 is greater than T2, transmission according to the scheduling DCI without receiving the PRS; and otherwise
receive the PRS without scheduling transmission.

15. The apparatus according to claim 13, wherein the receiving module is specifically configured to receive, in cases that the PRS is located outside an initial BWP, T1 is greater than a sum of T2 and T3 and transmission scheduled by the scheduling DCI does not collide with the PRS, the PRS without scheduling the transmission; and otherwise schedule transmission according to the scheduling DCI without receiving the PRS.

16. The apparatus according to any one of claims 13 to 15, wherein T2 is determined by at least one of:
a capability of a terminal;
a first value configured by a network-side device; and
a second value agreed on in a protocol.

17. The apparatus according to claim 13 or 15, wherein T3 is determined by frequency ranges to which a positioning layer and a serving cell belong.

18. The apparatus according to claim 12, wherein a quantity of the measurement window comprised in a measurement window period is greater than or equal to 1, and the measurement window period is a least common multiple of a PRS period and a paging occasion period.

19. The apparatus according to claim 18, wherein in a case that the quantity of the measurement window comprised in the measurement window period is equal to 2, a start time point of a first measurement window is Y1-(X1+P1), Y1 is a start time point of a paging occasion, X1 is duration of the first measurement window, and P1 is pre-paging preparation time of a terminal; and
a start time point Y2 of a second measurement window is an end time point of the paging occasion.

20. The apparatus according to claim 18, wherein in a case that the quantity of the measurement window comprised in the measurement window period is equal to 1, a start time point of the measurement window is Y1-(X2+P1), Y1 is a start time point of a paging occasion, X2 is duration of the measurement window, and P1 is pre-paging preparation time of a terminal; or
a start time point of the measurement window is an end time point of the paging occasion.

21. The apparatus according to claim 18 or 19, wherein the duration of the measurement window is available PRS duration.

22. The apparatus according to claim 18 or 19, wherein the duration of the measurement window is determined by a terminal, configured by a network-side device, or agreed on in a protocol; and
the pre-paging preparation time of the terminal is determined by the terminal, configured by the network-side device, or agreed on in the protocol.

23. A terminal, comprising a processor and a memory, wherein the memory stores a program or an instruction capable of being run on the processor, and the program or the instruction is executed by the processor to implement steps of the method for receiving a PRS according to any one of claims 1 to 11.

24. A readable storage medium, storing a program or an instruction, wherein the program or the instruction is executed by a processor to implement steps of the method for receiving a PRS according to any one of claims 1 to 11.
